# DEMANDE DE BREVET EUROPEEN

(11) **EP 3 246 379 A1**
(43) Date de publication de la demande: **22.11.2017**
(21) Numéro de dépôt: 16170019.0
(22) Date de dépôt: 17.05.2016
(51) Int. Cl.: C09K 21/14, A62C 3/16, E04B 1/94, F16L 5/04

(54) **PIECE SOUPLE A PROPRIETES COUPE-FEU**

(71) Demandeur: Compart, 30340 Salindres (FR)
(72) Inventeur: SAUTTREAU, Jean, 30140 Bagard (FR); ORTEGA, Esteban, 26000 Valence (FR)
(74) Mandataire: Delaveau, Sophie

(57) **Abrégé**

L'invention porte principalement sur une pièce souple à propriétés coupe-feu, caractérisée en ce qu'elle comporte une nappe (3,3a) d'éléments fibreux inorganiques et isolants (2) qui est au moins partiellement enduite et au moins partiellement imprégnée d'un gel aqueux (4), formant ainsi une nappe gélifiée (5,5a).

La pièce souple de l'invention trouve notamment application dans la protection au feu des chemins de câbles électriques.

## Description

L'invention concerne une pièce souple présentant des propriétés coupe-feu.

L'invention s'inscrit dans le domaine de la protection d'éléments structurels ou électriques contre l'élévation excessive de température et la propagation de la chaleur lors d'un incendie. Ces éléments peuvent être des poutres, des tuyaux, des câbles, des câbles électriques ou tout autre élément nécessitant une protection particulière lors d'un incendie.

L'invention s'inscrit plus particulièrement dans la protection des câbles électriques qui s'étendent dans des chemins de câbles.

Il est connu d'utiliser des fibres céramiques réfractaires pour protéger de telles installations. Mais l'utilisation seule de ces fibres s'avère insuffisante pour retarder efficacement la propagation de la chaleur jusqu'à l'élément à protéger. Par ailleurs, ces fibres présentent des risques toxicologiques élevés lorsqu'elles sont dispersées, inhalées ou ingérées.

Les publications EP 612 540 et EP 820 326 décrivent des dispositifs souples à propriétés coupe-feu destinés notamment protéger des câbles lors d'un incendie. Ces dispositifs sont faits de plusieurs nappes de fibres isolantes qui entourent le chemin de câbles et qui sont assemblées par superposition entre elles par une colle réfractaire.

L'installation de ces dispositifs implique la mise en place d'une première nappe, la réalisation d'un premier encollage, l'installation d'une seconde nappe, etc ... jusqu'à l'obtention de l'épaisseur de protection souhaitée.

Ces dispositifs présentent de nombreuses contraintes et inconvénients. En premier lieu, ces installations nécessitent l'intervention d'un personnel qualifié pour positionner les nappes de fibres et réaliser le ou les encollages. Par ailleurs, une fois le dispositif monté, il n'est plus possible de le démonter pour le réutiliser sur un autre chemin de câbles ou en cas de maintenance. En outre, l'installation de ces dispositifs engendre la manipulation des nappes de fibres, ce qui présente les risques toxicologiques précédemment expliqués. Enfin, l'utilisation de colles réfractaires provoque la rigidification du dispositif qui ne peut alors pas s'adapter aux déformations des installations pouvant survenir lors de l'augmentation de température.

Dans ce contexte, la présente invention vise une pièce souple à propriétés coupe-feu permettant de pallier aux inconvénients précités.

À cet effet, la pièce souple de l'invention comporte une nappe d'éléments fibreux inorganiques et isolants qui est au moins partiellement enduite et au moins partiellement imprégnée d'un gel aqueux, formant ainsi une nappe gélifiée.

L'utilisation d'un gel aqueux à la surface de la nappe de fibres et imprégnant au moins en partie ladite nappe, présente de nombreux avantages. En premier lieu, la présence de molécules d'eau à proximité immédiate des fibres permet de retarder l'élévation de température des fibres puisque l'évaporation des molécules d'eau est une réaction de type endothermique qui est donc génératrice d'absorption d'énergie. La nappe gélifiée présente ainsi des performances améliorées de protection vis-à-vis du feu.

En outre, les molécules d'eau incorporées ne sont pas libres mais appartiennent à une structure de type gel. Il en résulte également que lors d'une élévation de température, les cycles d'évaporation et de condensation à proximité des fibres sont nombreux et retardent plus encore la propagation de la chaleur.

Enfin, les fibres étant imprégnées de gel, elles ne sont plus directement exposées à l'air ce qui limite les risques toxicologiques.

La pièce souple de l'invention peut également comporter les caractéristiques optionnelles suivantes considérées isolément ou selon toutes les combinaisons techniques possibles :
- le gel aqueux est réalisé à base d'un ou de plusieurs polymères rétenteurs d'eau.
- le gel aqueux est réalisé à base d'un ou de plusieurs polymères super absorbants.
- le gel aqueux est à base de polyacrylamide.
- le gel aqueux comporte en outre un ou plusieurs additifs choisis parmi des composés à décomposition endothermiques tel que le trihydroxyde d'aluminium, des retardateurs de flammes, des agents ignifugeants, des agents de charbonnement physique et des produits intumescents.
- les éléments fibreux sont à base de fibres céramiques réfractaires.
- les fibres céramiques réfractaires sont des fibres de silicates alcalino-terreux.
- la nappe gélifiée est entourée d'un film polymère étanche.
- la nappe gélifiée est logée dans une enveloppe isolante thermiquement.
- l'enveloppe isolante est réalisée à base de tissu de verre enduit de silicone sur au moins l'une de ses faces et comprend une nappe supérieure et une nappe inférieure solidarisées entre elles au niveau de leurs bords périphériques en regard respectifs
- l'enveloppe est ajustée aux dimensions de la nappe gélifiée.
- l'enveloppe isolante comporte au moins une première bande d'attache positive qui s'étend le long d'un bord périphérique d'une première nappe supérieure ou inférieure, et au moins une première bande d'attache négative qui s'étend le long du bord périphérique opposé de la seconde nappe inférieure ou supérieure.
- l'enveloppe isolante comporte une seconde bande d'attache positive qui s'étend sur la première nappe le long du bord périphérique adjacent au bord comportant la première bande d'attache positive, et une seconde bande d'attache négative qui s'étend sur la seconde nappe le long du bord périphérique adjacent au bord comportant la première bande d'attache négative.
- les bandes d'attaches positives et négatives sont des bandes velcro respectivement crochet et velours.
L'invention porte enfin sur l'utilisation de la pièce souple telle que précédemment définie pour la protection de chemins de câbles électriques.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en coupe de la pièce souple de l'invention faite d'une nappe gélifiée partiellement imprégnée de gel aqueux selon une première variante de l'invention,
- la figure 2 est une représentation schématique en coupe de la pièce souple de l'invention faite d'une nappe gélifiée totalement imprégnée de gel aqueux selon une seconde variante de l'invention,
- la figure 3 est une représentation schématique en coupe de la pièce souple de l'invention faite d'une nappe gélifiée entourée d'un film polymère étanche selon une troisième variante de l'invention,
- la figure 4 est une représentation schématique de dessus de l'insertion de la nappe gélifiée dans une enveloppe isolante selon une quatrième variante de l'invention,
- la figure 5 est une représentation de dessus de l'enveloppe isolante dans laquelle est logée la nappe gélifiée en formant la pièce souple de l'invention selon la quatrième variante,
- la figure 6 est une vue en coupe de la nappe gélifiée logée dans l'enveloppe isolante selon la ligne VI-VI de la figure 5,
- la figure 7 est une vue de coté d'une pièce souple de l'invention selon la quatrième variante qui est montée autour d'un chemin de câbles,
- la figure 8 est une vue de coté de deux pièces souples de l'invention selon la quatrième variante qui sont montées en bout à bout autour d'un chemin de câbles,
- la figure 9 est une vue en coupe de la pièce souple de l'invention de la quatrième variante autour d'un chemin de câbles selon la ligne IX-IX de la figure 8,
- la figure 10 est une vue en coupe de deux pièces souples de l'invention selon la quatrième variante qui sont montées superposées autour d'un chemin de câbles, et
- la figure 11 est un graphique comparant l'évolution de la température dans une plaque de béton cellulaire soumise au feu et protégée par une nappe de fibres de l'art antérieur et par la pièce souple de l'invention.

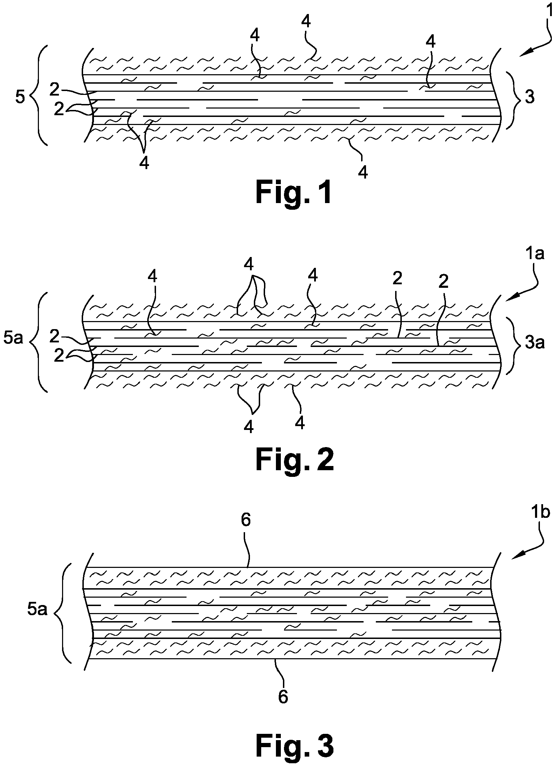

En référence à la figure 1, la pièce souple de l'invention 1 selon la première variante de réalisation comporte un réseau de fibres inorganiques et isolantes 2 constituant une nappe de fibres 3 qui est recouverte ou enduite de gel aqueux 4 et partiellement imprégnée dudit gel aqueux 4 en formant une nappe gélifiée 5.

En référence à la figure 2, la pièce souple de l'invention 1a est identique à celle de la figure 1, sauf en ce que la nappe de fibres 3a est totalement imprégnée dans son épaisseur par le gel aqueux 4 en formant une nappe gélifiée 5a.

Les fibres inorganiques et isolantes sont de préférence biosolubles pour limiter les risques toxicologiques lors de leur manipulation. Ces fibres constituent de façon connue un isolant thermique résistant à des hautes températures. Les fibres inorganiques et isolantes sont choisies parmi tout matériau fibreux ou ouaté isolant sec, par exemple la laine de roche, la laine de verre ou des fibres céramiques réfractaires telles que les fibres de silicates alcalino-terreux.

Les fibres peuvent être libres, organisées ou non, tissées ou organisées sous forme d'une nappe 3 comme représenté sur la figure 1. L'épaisseur de la nappe 3 est de l'ordre de quelques millimètres jusqu'à environ 4 centimètres.

Le gel aqueux 4 permettant la rétention de molécules d'eau à la surface et au sein de la nappes de fibres 3, est réalisé à base de polymères aptes à absorber et retenir des molécules d'eau. À titre d'exemple, on utilise de l'alcool polyvinylique (PVAL), du poly(oxyde d'éthylène) (POE) ou encore des polymères super-absorbants (SAP) tels que les polyacrylates et les polyamides, connus pour la rétention de liquide dans des domaines variés tels que les couches pour bébés ou l'irrigation des cultures. On pourra utiliser un mélange de plusieurs des polymères précités.

Le gel aqueux 4 peut comporter en outre un ou plusieurs additifs, notamment des retardateurs de flammes à décomposition endothermique tels que du trihydroxyde d'aluminium (ATH), du dihydroxyde de magnésium, du borate de zinc, des agents de charbonnement physiques tels que du graphite, du mica, de la vermiculite, ou encore des agents ignifugeants, et tout autre produit intumescents.

La nappe gélifiée 5 est réalisée de la façon suivante : le gel aqueux 4 est préalablement préparé par mise en contact de granules d'un polymère super absorbant à base de polyacrylamide, avec de l'eau, et le cas échéant les additifs précités. La nappe de fibres 3 est ensuite enduite par le gel aqueux 4 qui migre dans l'épaisseur de la dite nappe de fibres 3. Alternativement, le gel aqueux 4 est versé sur les deux faces de la nappe de fibres 3.

La taille des granules de polymère superabsorbant peut varier entre 0,5 et 4 millimètres. En effet, si l'on souhaite, comme représenté sur la figure 1, que le gel aqueux 4 ne migre que partiellement dans l'épaisseur de la nappe de fibres 3, on utilise des granules de petites tailles, entre 0,5 et 1 millimètres par exemple, de sorte que la prise du gel aqueux 4 s'effectue avant de plonger la nappe de fibres 3 dans le gel aqueux 4, le gel aqueux 4 ne migrant, en raison de sa viscosité, que partiellement dans la nappe de fibres 3.

Si l'on souhaite, comme représenté en figure 2, que le gel aqueux 4 migre dans toute l'épaisseur de la nappe de fibres 3a, on utilise des granules de plus grande taille, par exemple supérieure à 1 millimètres, et on plonge la nappe de fibres 3 dans le gel aqueux 4 avant que la gélification de ce dernier ne soit achevée. De cette façon, le gel aqueux 4 n'ayant pas encore totalement pris est suffisamment liquide pour imprégner la nappe de fibres 3a dans toute son épaisseur, tout en poursuivant son processus de gélification au sein des fibres 2. On contrôle ainsi le taux d'imprégnation de la nappe de fibres 3,3a par le gel aqueux.

La nappe gélifiée 5,5a en résultant est enduite de gel aqueux 4 et au moins partiellement imprégnée dudit gel aqueux 4. En restant dans le cadre de l'invention, le film de gel aqueux 4 formé à la surface de la nappe de fibres 3,3a peut être localement absent sur certaines parties de la nappe de fibres 3,3a, c'est pourquoi on considère que la nappe de fibres 3,3a est au moins partiellement enduite du gel aqueux 4.

On décrit dans les exemples 1 et 2 ci-dessous des exemples non limitatifs de réalisation du gel aqueux.

### Exemple 1 :

Le gel aqueux est réalisé par mélange de 1% en poids en polyacrylamide, de 15% de trihydroxyde d'aluminium et de 84% en poids d'eau.

### Exemple 2 :

Le gel aqueux est réalisé par mélange de 1% en poids en polyacrylamide, de 10% de trihydroxyde d'aluminium et de 89% en poids d'eau.

L'utilisation du gel aqueux 4 comme véhicule de molécules d'eau au sein de la nappe de fibres 3,3a permet d'éviter, ou à tout le moins de limiter, l'évaporation des molécules d'eau. Pour limiter plus encore ces phénomènes d'évaporation, on peut prévoir, comme illustré en figure 3, que la nappe gélifiée 5a soit entourée d'un film polymère étanche 6, par exemple un film polymère à base de polyéthylène. L'utilisation d'un film étanche 6 s'applique autant à la nappe gélifiée 5 partiellement imprégnée de la figure 1 qu'à la nappe gélifiée 5a totalement imprégnée de la figure 2.

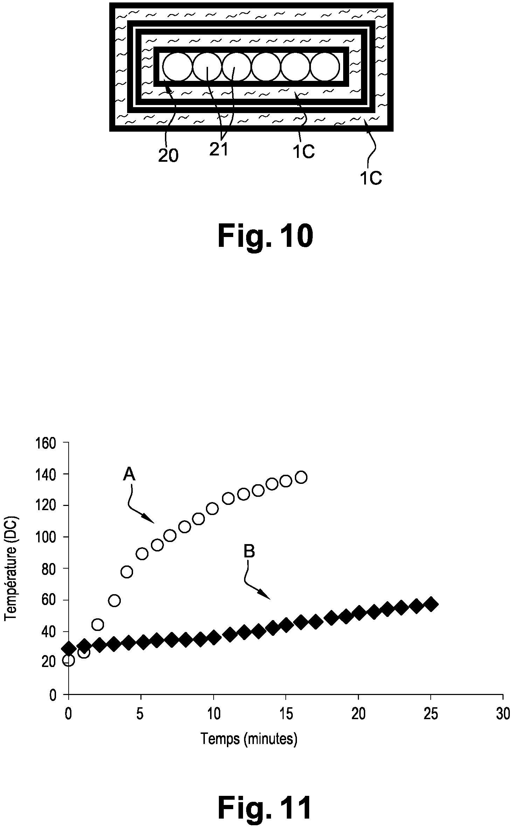

On se réfère à la figure 11 qui compare des résultats de montée en température dans une plaque de béton lorsque celle-ci est protégée par un système de l'art antérieur et par la pièce souple de l'invention de la figure 1.

Pour réaliser ces tests, une plaque de béton cellulaire est fixée mécaniquement au niveau de l'une de ses faces avec d'une part une nappe de laine de silicates alcalino-terreux, et d'autre part avec une nappe gélifiée 5 selon la première variante.

On mesure la température au sein de la plaque de béton au moyen d'un thermocouple. La mesure de température est prise à l'interface entre la nappe de laine ou la nappe gélifiée 5, et la plaque de béton. La nappe de laine ou la nappe gélifiée est ensuite enflammée. On suit alors l'évolution de la température à l'interface entre la nappe de laine ou la nappe gélifiée, et la plaque de béton.

La courbe A illustre les résultats obtenus lorsque la nappe utilisée est la nappe de laine de l'art antérieur. On constate une montée en température rapide, dès les premières minutes, atteignant 140°C au bout de 15 minutes d'exposition aux flammes.

La courbe B illustre les résultats obtenus lorsque la nappe utilisée est la nappe gélifiée 5 de l'invention. On constate une montée en température très faible, la température à l'interface atteignant un peu moins de 60 °C au bout de 25 minutes.

Ces résultats illustrent l'augmentation substantielle de la tenue au feu d'une installation protégée par la pièce souple de l'invention.

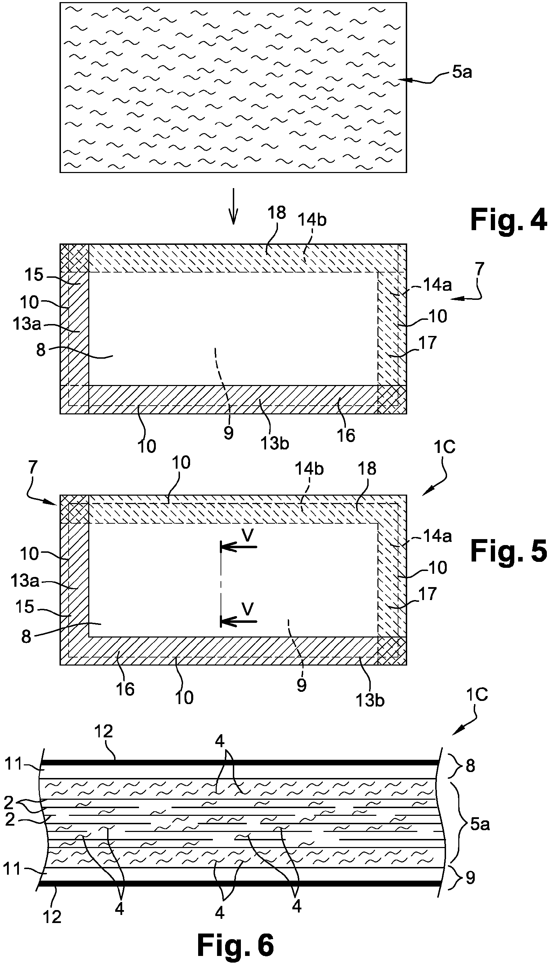

En référence à la figure 4, selon une quatrième variante, la nappe gélifiée 5a est logée dans une enveloppe isolante thermiquement 7. La nappe gélifiée peut être celle de la figure 1, de la figure 2 ou de la figure 3.

L'enveloppe isolante 7 comporte une nappe supérieure 8 et une nappe inférieure 9 de même dimension, réalisées à base d'un tissu de verre enduit sur sa face supérieure en contact avec le milieu environnant par du silicone formant une couche étanche, et assemblées ensemble par exemple par des coutures 10 situées au niveau de leurs bords périphériques en regard. La dénomination « supérieure » et « inférieure » des nappes 8,9 est utilisée dans un souci descriptif mais peut bien évidemment être inversée, l'enveloppe 7 pouvant s'utiliser dans les deux sens.

L'enveloppe isolante 7 est ajustée aux dimensions de la nappe gélifiée 5 de façon qu'une fois la nappe gélifiée 5 logée dans l'enveloppe 7 entre les nappes supérieure 8 et inférieure 9, toute la surface de l'enveloppe isolante 7 est faite d'une juxtaposition de nappe supérieure 8, de nappe gélifiée 5a et de nappe inférieure 9 (figure 6).

L'insertion de la nappe gélifiée 5a s'effectue au niveau d'un bord de l'enveloppe isolante 7 dénué dans un premier temps de la couture 10. Une fois la nappe gélifiée 5a insérée dans l'enveloppe isolante 7, la dernière couture 10 est réalisée et on obtient une pièce souple 1c selon une quatrième variante.

En référence à la figure 6, cette pièce souple 1c présente en coupe la nappe gélifiée 5a prise en sandwich entre la nappe supérieure 8 faite de tissu de verre 10 enduit de silicone 11 et la nappe inférieure 9 également faite de tissu de verre 10 enduit de silicone 11.

L'utilisation de l'enveloppe isolante 7 dans laquelle est logée la nappe gélifiée 5a présente l'avantage d'augmenter la protection au feu de par la présence de tissu de verre 11 et de silicone 12, d'améliorer l'étanchéité de la nappe gélifiée 5a en évitant l'évaporation de l'eau emprisonnée dans les fibres 2, de limiter plus encore les risques toxicologiques liés à l'emploi de fibres et de faciliter le stockage et le transport de la pièce souple 1c.

En outre, on prévoit sur l'enveloppe isolante 7 des moyens d'attaches pour faciliter le positionnement de la pièce souple 1c sur l'installation à protéger, par exemple un chemin de câbles.

En référence aux figures 4 et 5, ces moyens d'attache comportent des bandes velcro 13a,13b,14a,14b s'étendant le long des bords périphériques de l'enveloppe isolante 7 selon la disposition suivante : une bande velcro positive ou autrement dénommée « crochet » 13a est solidarisée, par exemple par collage, le long d'un bord périphérique 15 de la nappe supérieure 8 et une bande velcro négative ou autrement dénommée « velours » 14a est solidarisée, par exemple par collage, le long du bord périphérique opposé 17 de la nappe inférieure 9.

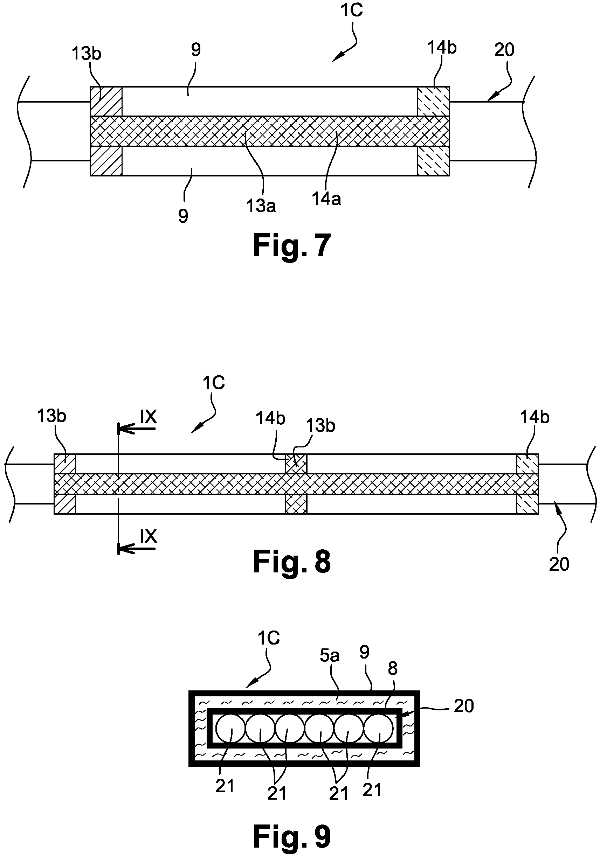

Ces deux bandes velcro 13a,14a permettent d'assurer la mise en place et la fixation facile et rapide de la pièce souple 1c autour d'un chemin de câbles 20 comme représenté sur la figure 7. En effet, il suffit de positionner la pièce souple 1c autour du chemin de câbles 20 et d'amener la bande velcro positive 13a en appui de contact sur la bande velcro négative 14a. La pièce souple 1c assure alors sa fonction de protection anti-feu.

Pour permettre la mise en place en bout à bout de plusieurs pièces souples 1c telle qu'illustré sur la figure 8, on prévoit en outre deux autres bandes velcro. En référence aux figures 4 et 5, on prévoit ainsi une seconde bande velcro positive 13b solidarisée sur la nappe supérieure 8 le long du bord périphérique adjacent 16 au bord périphérique 15 comportant la première bande velcro 13a, et une seconde bande velcro négative 14b solidarisée sur la nappe inférieure 9 le long du bord périphérique adjacent 18 au bord périphérique 17 comportant la première bande velcro 14a.

On retrouve sur la figure 7 les secondes bandes velcro positive 13b et négative 14b aux extrémités longitudinales de la pièce souple 1c.

En référence à la figure 8, deux pièces souples 1c sont assemblées en bout à bout le long et autour du chemin de câbles 20 et sont solidarisées ensemble par appui de contact de la seconde bande velcro négative 14b d'une première pièce souple 1c sur la seconde bande velcro positive 13b de la pièce souple adjacente 1 c.

L'enveloppe 7 munie des bandes velcro ne nécessite pas de personnel qualifié pour la mise en place de la ou des pièces souple 1c sur l'installation à protéger, en l'occurrence le chemin de câbles.

L'enveloppe 7 est ici décrite renfermant la nappe gélifiée 5, mais l'enveloppe 7 peut également être utilisée en renfermant une nappe de fibres de l'art antérieur dénuée de gel aqueux.

En référence à la figure 9, les câbles 21 qui s'étendent dans le chemin de câbles 20 sont ainsi entourés de la pièce souple 1c de l'invention faite de la nappe supérieure 8 de l'enveloppe isolante, de la nappe gélifiée 5a et de la nappe inférieure 9 de l'enveloppe isolante. Par souci de clarté, les bandes velcro ne sont pas représentées sur cette figure..La nappe gélifiée peut naturellement être celle de la figure 1 et être entourée ou pas du film étanche 6 illustré sur la figure 3.

En référence à la figure 10, pour augmenter plus encore les performances au feu, on peut superposer deux pièces souples 1c l'une sur l'autre autour du chemin de câbles 20.

La pièce souple 1c comportant la nappe gélifiée logée dans l'enveloppe isolante 7 munie des bandes velcro peut être facilement manipulée, montée autour d'un chemin de câbles et réutilisée, par exemple lors d'opérations de maintenance ou de retirage des câbles électriques. Sa manipulation ne nécessite l'intervention d'aucun personnel qualifié. En outre, les risques toxicologiques liés à la présence des fibres céramiques sont tout à fait limités du fait de la présence conjointe du gel aqueux et de de l'enveloppe. Enfin, les performances au feu du fait de l'imprégnation de la nappe de fibres dans le gel aqueux sont nettement améliorées.

L'utilisation de la pièce souple 1,1a,1b,1c de l'invention ne se limite pas à la protection des câbles électriques mais peut également trouver application pour d'autres installations nécessitant une protection anti-feu, par exemple des tuyauteries ou des éléments structurels.

## Revendications

1. Pièce souple à propriétés coupe-feu, **caractérisée en ce qu'**elle comporte une nappe (3,3a) d'éléments fibreux inorganiques et isolants (2) qui est au moins partiellement enduite et au moins partiellement imprégnée d'un gel aqueux (4), formant ainsi une nappe gélifiée (5,5a).

2. Pièce souple selon la revendication 1, **caractérisée en ce que** le gel aqueux (4) est réalisé à base d'un ou de plusieurs polymères rétenteurs d'eau.

3. Pièce souple selon la revendication 2, **caractérisée en ce que** le gel aqueux (4) est réalisé à base d'un ou de plusieurs polymères super absorbants.

4. Pièce souple selon la revendication 3, **caractérisée en ce que** le gel aqueux (4) est à base de polyacrylamide.

5. Pièce selon l'une quelconque des revendications précédentes, **caractérisé en ce que** le gel aqueux (4) comporte en outre un ou plusieurs additifs choisis parmi des composés à décomposition endothermiques tel que le trihydroxyde d'aluminium, des retardateurs de flammes, des agents ignifugeants, des agents de charbonnement physique et des produits intumescents.

6. Pièce souple selon l'une quelconque des revendications précédentes, caractérisé en ce les éléments fibreux (2) sont à base de fibres céramiques réfractaires.

7. Pièce souple selon la revendication 6, **caractérisée en ce que** les fibres céramiques réfractaires sont des fibres de silicates alcalino-terreux.

8. Pièce souple selon l'une quelconque des revendications précédentes, **caractérisée en ce que** la nappe gélifiée (5,5a) est entourée d'un film polymère étanche (6).

9. Pièce souple selon l'une quelconque des revendications précédentes, **caractérisée en ce que** la nappe gélifiée (5,5a) est logée dans une enveloppe isolante thermiquement (7).

10. Pièce souple selon la revendication 9, **caractérisée en ce que** l'enveloppe isolante (7) est réalisée à base de tissu de verre (11) enduit de silicone (12) sur au moins l'une de ses faces.et comprend une nappe supérieure (8) et une nappe inférieure (9) solidarisées entre elles au niveau de leurs bords périphériques en regard respectifs.

11. Pièce souple selon l'une quelconque des revendications 9 et 10, **caractérisée en ce que** l'enveloppe (7) est ajustée aux dimensions de la nappe gélifiée (5,5a). (7).

12. Pièce souple selon l'une quelconque des revendications 10 et 11, **caractérisée en ce que** l'enveloppe isolante (7) comporte au moins une première bande d'attache positive (13a) qui s'étend le long d'un bord périphérique (15) d'une première nappe supérieure (8) ou inférieure (9), et au moins une première bande d'attache négative (14a) qui s'étend le long du bord périphérique opposé (17) de la seconde nappe inférieure (9) ou supérieure (8).

13. Pièce souple selon la revendication 12, **caractérisée en ce que** l'enveloppe isolante comporte une seconde bande d'attache positive (13b) qui s'étend sur la première nappe (8,9) le long du bord périphérique adjacent (16) au bord (15) comportant la première bande d'attache positive (13a), et une seconde bande d'attache négative (14b) qui s'étend sur la seconde nappe (9,8) le long du bord périphérique adjacent (18) au bord (17) comportant la première bande d'attache négative (14a).

14. Pièce souple selon les revendications 12 et 13, **caractérisée en ce que** les bandes d'attaches positives et négatives (13a,13b,14a,14b) sont des bandes velcro respectivement crochet et velours

15. Utilisation de la pièce souple selon l'une quelconque des revendications précédentes pour la protection de chemins de câbles électriques.
